# EUROPEAN PATENT SPECIFICATION

(11) **EP 3 306 801 B1**
(45) Date of publication and mention of the grant of the patent: **04.05.2022**
(21) Application number: 16802924.7
(22) Date of filing: 14.04.2016
(51) Int. Cl.: H02M 1/32, H02M 7/5387, H02M 1/00

(54) **POWER CONVERSION DEVICE AND MOTOR DEVICE**
LEISTUNGSUMWANDLUNGSVORRICHTUNG UND MOTORVORRICHTUNG
DISPOSITIF DE CONVERSION DE PUISSANCE ET DISPOSITIF MOTEUR

(30) Priority: 02.06.2015 JP 2015111898
(43) Date of publication of application: 11.04.2018
(73) Proprietor: Hitachi Industrial Equipment Systems Co., Ltd., Chiyoda-ku Tokyo 101-0022 (JP)
(72) Inventor: ISHIGAKI, Takashi, Tokyo 100-8280 (JP); IBORI, Satoshi, Tokyo 101-0022 (JP); SASAKI, Yasushi, Tokyo 101-0022 (JP); TOMIYAMA, Kiyotaka, Tokyo 101-0022 (JP); KAGEYAMA, Hiroshi, Tokyo 100-8280 (JP)
(74) Representative: MERH-IP Matias Erny Reichl Hoffmann Patentanwälte PartG mbB
(86) International application number: PCT/JP2016/061993
(87) International publication number: WO 2016/194487

(56) References cited:
- EP-A1- 2 306 631
- EP-A1- 2 566 034
- EP-A2- 1 808 955
- WO-A1-2012/056766
- WO-A1-2013/125366
- JP-A- H05 207 766
- JP-A- S62 166 785
- JP-A- 2011 188 653
- JP-A- 2014 236 533
- US-A1- 2012 057 386
- US-A1- 2014 110 723
- REMY OUAIDA ET AL: "SiC vertical JFET pure diode-less inverter leg", APPLIED POWER ELECTRONICS CONFERENCE AND EXPOSITION (APEC), 2013 TWENTY-EIGHTH ANNUAL IEEE, IEEE, 17 March 2013 (2013-03-17), pages 512-517, XP032410385, DOI: 10.1109/APEC.2013.6520258 ISBN: 978-1-4673-4354-1

## Description

### Technical Field

The present invention relates to a power conversion apparatus and a motor apparatus.

### Background Art

Patent Literature 1 describes that, when the breakdown of a switching element included in an inverter is detected, switching elements of all the arms of the inverter are turned off, and then a switching element that has been broken down short-circuitedly for a load is turned off. Subsequently, the switching elements of the remaining arms on the side of the arm to which the short-circuited switching element is belonging are turned on.

Patent Literature 2 describes that, when an excess current is detected, control is taken so that a switching element connected to a diode in parallel is turned on.

Nonpatent Literature 1 describes that there is a possibility that, owing to the recombinations of electrons and holes that occur when a current passes through a PN body diode in SiC-MOSFET, stacking faults grow, with the result that on-voltage becomes large and the like occur, that is to say, bipolar degradation phenomena occur.

### Citation List

### Patent Literature

Patent Literature 1: Japanese Unexamined Patent Application Publication No. Hei 6-121461
Patent Literature 2: WO 2012/056766
Patent Literature 3: JP 2014 236533 A
Patent Literature 4: EP 2 306 631 A1
Patent Literature 5: EP 2 566 034 A1
Patent Literature 6: EP 1 808 955 A2

Patent Literature 3 describes a method for protecting a power conversion device from damage by a short circuit.

Patent Literature 4 describes a driving apparatus for an electromagnetic load.

Patent Literature 5 describes a switching circuit with a arm having two switching elements connected in series and reverse conducting elements connected in parallel to the switching elements.

Patent Literature 6 describes an inverter device including switching devices and diodes connected in parallel with the switching devices, which are provided in pairs of upper and lower arms.

### Nonpatent Literature

Nonpatent Literature 1: "Stacking fault expansion from basal plane dislocations converted into threading edge dislocations in 4H-SiC epilayers under high current stress", Journal of Applied Physics 114, 014504(2013)

### Summary of Invention

### Technical Problem

In a power conversion apparatus such as an inverter device, a semiconductor device in which pairs of IGBTs (Insulated Gate Bipolar Transistor) and PIN (p-intrinsic-n) diodes (wherein each of the IGBTs and each of the PIN diodes are connected to each other in antiparallel) are disposed in upper arms and lower arms has been used conventionally.

AC power is generated as the output of the inverter device when the respective IGBTs in the upper arms and lower arms are alternately switched by a driving device connected to the gate terminals of the respective IGBTs. At this time, a conduction loss and a switching loss are generated at each element, which leads to the power conversion loss of the inverter device. Today the loss of a Si device almost reaches the theoretical value determined by the physical value of Si, and therefore it is difficult to make the loss smaller.

On the other hand, wide band gap semiconductors such as SiC and GaN have larger band gaps in comparison with silicon, and one of their features is that their dielectric breakdown electric fields are about one digit larger, and therefore they are considered to be promising as next generation power devices. Especially a vertical SiC-MOSFET (Metal Oxide Semiconductor Field Effect Transistor) can be expected to have a low on-resistance, which is significantly lower than that of a conventional silicon element, with its wide-range withstand voltage from several hundreds V to several kV. In addition, because, unlike an IGBT, a MOSFET is a unipolar element, it can perform a high-speed switching operation. Therefore, it can be expected that an inverter device including SiC-MOSFETs will have a significant low loss.

A vertical MOSFET includes body diodes (built-in diodes) inside of its element due to its device structure. This is because a P-type body area electrically connected to a source electrode and an N-type drift area electrically connected to a drain electrode function as a PN diode (PND) between the source and the drain, and this PN diode can be considered to be connected to a channel, which becomes conductive when the vertical MOSFET is turned on, in antiparallel. In other words, unlike the case where an inverter device is comprised of IGBTs, diodes connected to vertical MOSFETs in antiparallel are unnecessary in the case where the inverter device is comprised of the vertical MOSFETs. This means that an inverter device can be comprised of only MOSFET elements, which greatly contributes to the downsizing and cost reduction of the inverter device.

On the other hand, although a SiC-MOSFET has a low on-resistance, it has also a feature that its saturation current is large. Because there is a trade-off relation between the saturation current of a MOSFET and the channel resistance of the MOSFET, as the channel of the SiC-MOSFET is designed so as to have a lower on-resistance value, the saturation current of the SiC-MOSFET becomes larger. This saturation current becomes a current that flows when the relevant inverter becomes short-circuited owing to a malfunction or the like, so that a large excess current leads to the breakdowns of elements and the inverter device. Generally speaking, although an inverter device is provided with mechanisms for detection of an excess current and for protection, it is preferable that a time period from a time when a short circuit failure occurs to a time when a protection operation is finished should be a comparatively long time period (for example, about 10 µs) in preparation for the risk of erroneous detection (unnecessary operation) and because of the limitation of a protection circuit.

However, when elements with large saturation currents such as SiC-MOSFETs are used, in order to appropriately protect the elements at the time of the occurrence of a malfunction, it is necessary to turn off the elements in a shorter time period. Furthermore, as described in Nonpatent Literature 1, if a large current flows through the body diodes of SiC-MOSFETs, bipolar degradation is accelerated, which causes the reliabilities and performances of the elements to be more quickly deteriorated. In addition, a current value that brings about the deteriorations of the elements has a threshold. From this point of view, it also becomes necessary for a high-speed protection operation to be performed against a large short circuit current.

The present invention has been achieved with the abovementioned problems in mind, and one of the objects of the present invention is to realize the improvement of the reliabilities of elements used in a power conversion apparatus and a motor apparatus.

The abovementioned problems, other problems and new features of the present invention will be revealed in accordance with the description of the present invention and the accompanying drawings hereinafter.

### Solution to Problem

The invention is defined by the appended claims. In order to solve the abovementioned problems, a power conversion apparatus according to the present invention includes an inverter and a control device. The inverter includes plural upper arms and plural lower arms each arm of which includes a switching element made of a wide band gap semiconductor. When an excess current flows through the inverter, the control unit, after turning off a first arm, which is the upper or lower arm disposed on a path through which the excess current flows, and turning on a second arm that forms a pair of arms with the first arm, turns off the second arm in accordance with a current flowing through the second arm.

### Advantageous Effects of Invention

According to the present invention, the improvement of the reliabilities of elements used in a power conversion apparatus and a motor apparatus can be realized.

### Brief Description of Drawings

Fig. 1 is a circuit block diagram showing an example of an outline configuration of a power conversion apparatus according to a first embodiment.
Fig. 2 is a circuit diagram showing an example of a detailed configuration about and around an inverter in the power conversion apparatus shown in Fig. 1.
Fig. 3 is a circuit diagram showing an example of a configuration of a main part about driving the inverter in the power conversion apparatus shown in Fig. 1.
Fig. 4 is a waveform chart showing an example of an operation of a short circuit protection operation in the first embodiment.
Fig. 5A is a diagram showing an example of a current path in a time period 1 shown in Fig. 4.
Fig. 5B is a diagram showing an example of a current path in a time period 2 shown in Fig. 4.
Fig. 5C is a diagram showing an example of a current path in a time period 3 shown in Fig. 4.
Fig. 6 is an explanation diagram showing an example of an operation sequence associated with the short circuit protection operation shown in Fig. 4.
Fig. 7 is a cross-section view showing an example of an outline structure of a switching element shown in Fig. 2.
Fig. 8 is a circuit diagram showing an example of an outline configuration of a power conversion apparatus according to a second embodiment.
Fig. 9 is a circuit diagram showing an example of an outline configuration of a power conversion apparatus according to a third embodiment.
Fig. 10 is a circuit diagram showing an example of an outline configuration of a power conversion apparatus according to an example that is not part of the claimed invention.

### Description of Embodiments

Hereinafter, the embodiments of the present invention will be described.

In the configurations of the present invention that will be explained hereinafter, the same reference signs are used in common for the same portions or portions that have the same functions throughout different drawings, and redundant explanations about these portions are omitted in some cases.

Notations "first", "second", "third", and the like are attached to components in order to distinguish the components from each other, and these ordinal numbers are not necessarily used for specifying numbers or orders. Furthermore, a number for identifying a component is used for every context, and it is not always true that a number that is used for identifying a component for one context is used for identifying the same component for another context. In addition, one component identified by one number is not prevented from additionally having the function of another component identified by another number.

The positions, sizes, shapes, areas, and the like of the respective components shown by drawing and the like are shown for making the present invention easily understood, and there are some cases where they do not show the actual positions, sizes, shapes, areas, and the like. Therefore, the present invention is not necessarily limited to the positions, sizes, shapes, areas, and the like disclosed by the drawings and the like.

### First Embodiment

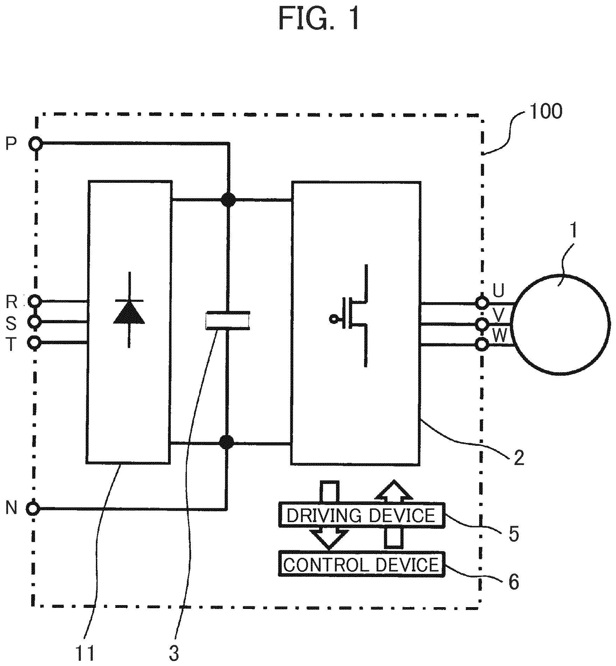

Fig. 1 shows an example of a configuration of a power conversion apparatus according to a first embodiment of the present invention.

The power conversion apparatus 100 shown in Fig. 1 includes: an inverter (inverter device) 2 for supplying power to an AC electric motor (motor) 1; a smoothing capacitor 3; a forward converter (converter device) 11; and a control unit for controlling the inverter 2. In this case, the control unit includes driving devices 5 and a control device 6. The power conversion apparatus 100 and the AC electric motor 1 make up a motor apparatus.

AC power input into the power conversion apparatus 100 is converted into DC power by the forward converter 11, and the DC power is input into the inverter device 2 via the smoothing capacitor 3. The inverter device 2 converts the input DC power into AC power of an arbitrary frequency for controlling the AC electric motor 1. The AC electric motor 1 executes a rotational movement and the like using the AC power provided by the inverter device 2.

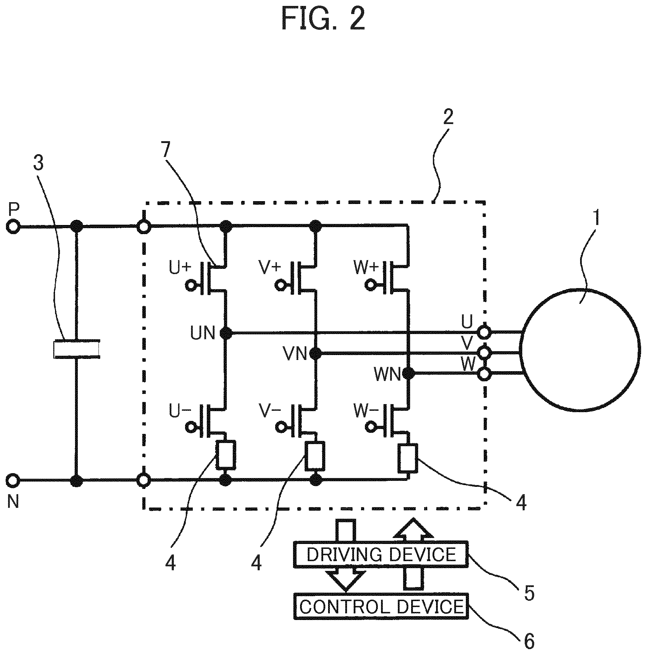

Here, the inverter device 2 includes switching elements 7, which are semiconductor elements, as shown in Fig. 2. Each of the switching elements 7 includes a switching element made of a wide band gap semiconductor typified by a SiC-MOSFET, for example. Although SiC is used as a wide band gap semiconductor in this case, SiC is not limited thereto, and GaN, gallium oxide, diamond, and the like can be used as wide band gap semiconductors.

In an example shown in Fig. 2, the inverter device 2 has a three-phase configuration, and includes a U phase, a V phase, and a W phase. An upper arm U+ is installed between a power supply terminal P, to which a power supply voltage on a high potential side is installed, and a branch node UN of the U phase; an upper arm V+ is installed between the power supply terminal P and a branch node VN of the V phase; and an upper arm W+ is installed between the power supply terminal P and a branch node WN of the W phase. An lower arm U- is installed between a power supply terminal N, to which a power supply voltage on a low potential side is installed, and a branch node UN; an lower arm V- is installed between the power supply terminal N and a branch node VN; and an lower arm W- is installed between the power supply terminal N and a branch node WN. Each arm of the upper arms and the lower arms includes a switching element 7. Furthermore, the branch node UN is connected to the AC electric motor 1 via an output terminal U of the U phase; the branch node VN is connected to the AC electric motor 1 via an output terminal V of the V phase; and the branch node WN is connected to the AC electric motor 1 via an output terminal W of the W phase.

Furthermore, in the example shown in Fig. 2, shunt resistors 4, which respectively work as current detectors, are installed between the power supply terminal P or the power supply terminal N and the branch nodes UN, VN, and WN of the three phases respectively. In this case, the shunt resistors 4 are installed in the lower arms of the three phases respectively. The shunt resistors 4 detect the currents of the three-phases respectively, and feed back the detected information to the driving devices 5 and the control device 6 which control the inverter device 2. Here, it is not always necessary to dispose the shut resistors 4 in the lower arms respectively, and they can be disposed in any places as long as the places are appropriate for the shunt resistors 4 to detect necessary currents.

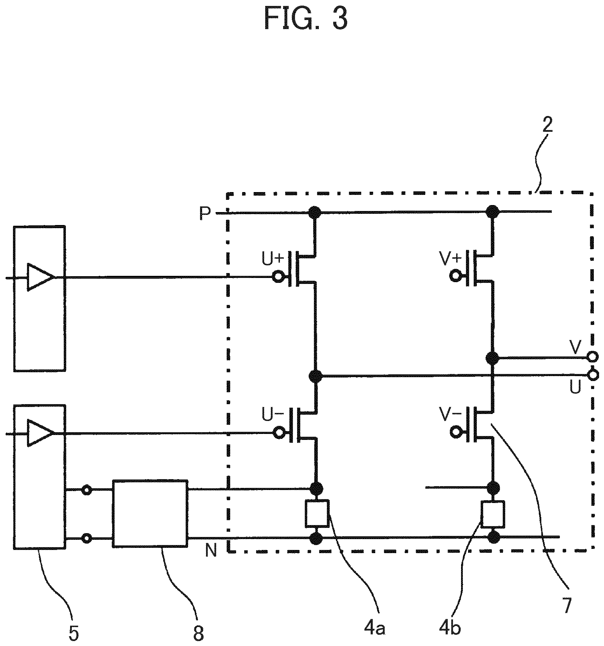

Fig. 3 shows the U phase and V phase of three phases included in the inverter device 2, and a driving device 5 for the U phase. The driving devices 5 are provided to the switching elements (SiC-MOSFETs) 7 of the respective arms included in the inverter device 2 on a one-on-one basis although all the driving devices are not shown here. A driving device 5 generates a gate voltage that is necessary for driving the relevant switching element 7 on the basis of a command sent from the relevant control device 6, and supplies the gate voltage to the relevant switching element 7.

In this case, it will be assumed that the lower arms U- of the U phase and the lower arm V-of the V phase include the shunt resistors 4a and 4b respectively. When a main current in the inverter device 2 flows through a shunt resistor 4, a voltage across the shunt resistor 4 is input to a driving device 5 via an erroneous detection prevention filter 8. If this voltage is equal to or larger than a certain reference value, it can be judged that an excess current is flowing, and therefore the normal driving operation is stopped and a protection operation is performed. Here, in this embodiment, because a shunt resistor is used as a current detector, a current can be directly detected, and a speedy response can be made unlike a case where a current transformer or the like is used as a current detector.

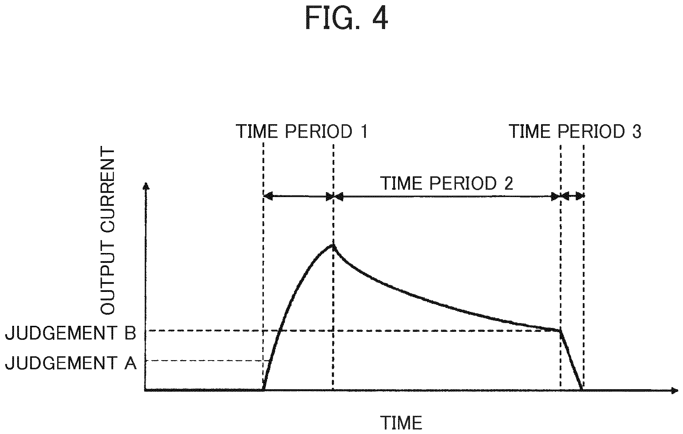

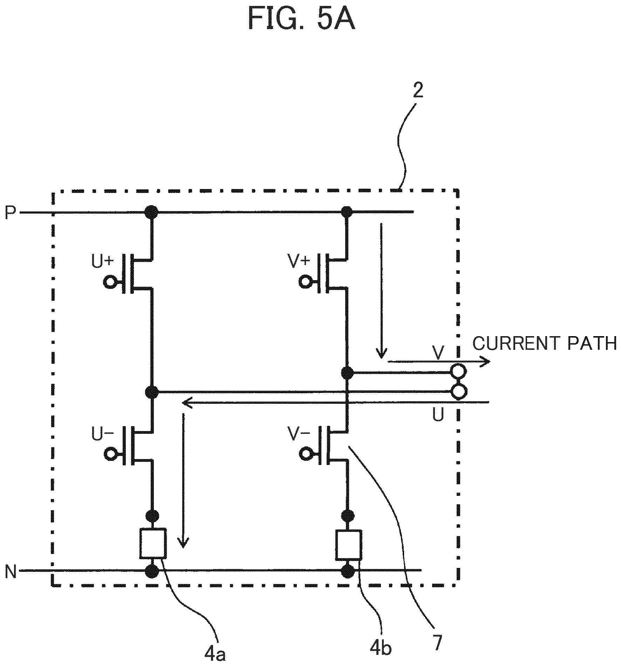

In this case, it will be assumed, for example, that, when the inverter device 2 drives the three-phase AC electric motor 1, there occurs a short circuit failure between the V phase and the U phase of the three-phase AC electric motor 1. The protection operation of this first embodiment in this case is shown in Fig. 4. Time is represented by the horizontal axis, and the output voltage of the V phase is represented by the vertical axis. First, if the switching elements (hereinafter, a "switching element" is abbreviated as an "element" in some cases) of the upper arm V+ and the lower arm U- have been on before the short circuit failure occurs, because a short circuit failure occurs between the output terminal V of the V phase and the output terminal U of the U phase, an excess current flows through a current path as shown in Fig. 5A, that is to say, through the elements 7 of the upper arm V+ and the lower arm U- (a time period 1). Because this excess current flows through the shunt resistor 4a of the lower arm U-, a voltage across the shunt resistor 4a becomes high, and this voltage is input to the relevant driving device 5 via a filter 8.

When a current that is equal to or more than a judgment A, which is shown in Fig. 4 and used for judging that an excess current is flowing, because this voltage exceeds a voltage reference that is calculated using the resistance value of the shunt resistance 4a and the current value of the judgment A, the driving device 5 goes into the state of a protection operation. The value of this judgment A is larger than the rated current value of the power conversion apparatus in a normal operation, and typically the value of this judgment A is set to onefold to severalfold the rated current value in consideration of a margin.

In this case, because the saturation current of a SiC-MOSFET is larger than that of a conventional Si element, the voltage across the shunt resistor 4a in a short circuit state becomes equal to or more than severalfold the voltage across the shunt resistor 4a in a normal operation state. This reduces the risk of the occurrence of an erroneous detection, and also shortens a delay time caused by the filter 8. With this, it becomes possible that the driving device 5 speedily goes into the state of the protection operation. The driving device 5 that detects the excess current promptly turns off at least one of the upper arm and the lower arm on a path through which the excess current flows, and speedily eliminates the short circuit state.

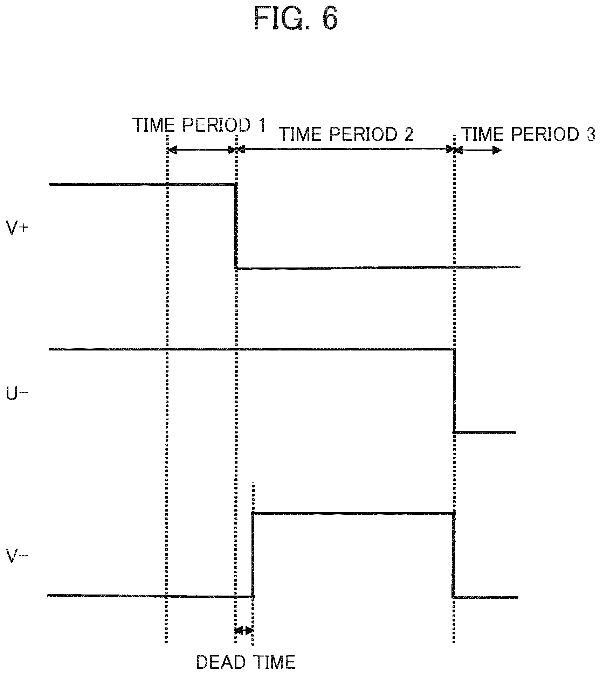

Fig. 6 shows a timing chart of gate signals. During the time period 1 shown in Fig. 6, for example, the gates of all the phases of the upper arms including the gate of the upper arm V+ are cut off. However, methods are not limited to the one above, and the short circuit state is eliminated by cutting off at least one of the upper arm V+ and the lower arm U- on the path of the excess current.

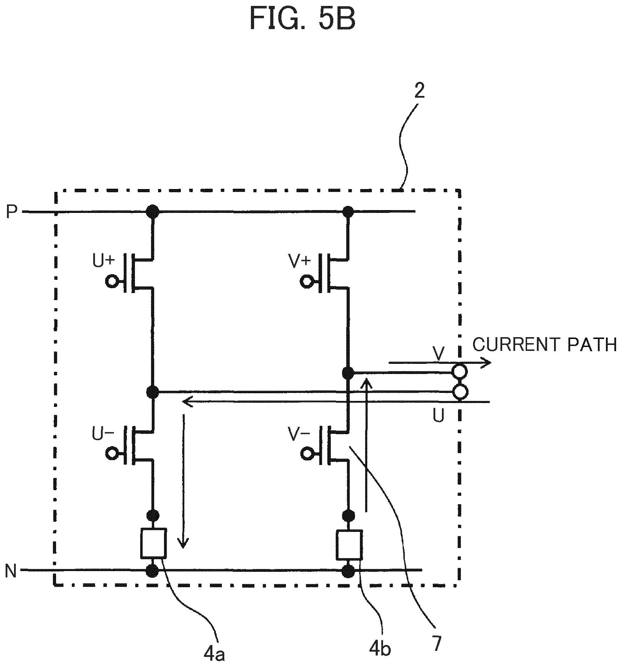

In this case, even if the element 7 of the upper arm V+ is turned off and the short circuit state is eliminated, the generated excess current is refluxed through the element 7 of the lower arm U- that still remains in an on state, and the body diode of the element 7 of the lower arm V- that is in an off state (if the element of the W phase is in an off state, a part of the excess current also refluxes through the body diode of the element 7 of the lower arm W-), that is to say, through a current path shown in Fig. 5B (a time period 2). As this reflux current is larger, there arises a bigger concern that the bipolar degradation of the body diode is generated and accelerated as mentioned above.

Therefore, the relevant reflux is speedily detected by the shunt resistor 4b during the time period 2, and the switching element 7 of the lower arm V- is turned on as shown in Fig. 6. In other words, a vertical MOSFET is different from an IGBT, and has a feature that, when the gate is on, a current can flow bidirectionally between the drain and the source of the vertical MOSFET. Therefore, if a synchronous rectification operation is executed on a vertical MOSFET through whose body diode a reflux current is flowing so that the MOSFET is turned on, not only the body diode of the MOSFET but also the low resistant channel conduction of the MOSFET, which is connected to the body diode in parallel, can also be utilized as a current path for the reflux current.

As mentioned above, by flowing the relevant reflux current through the MOSFET using the reverse conduction of the channel of the MOSFET, the hole current flowing through the body diode of the MOSFET is reduced, which makes it possible to suppress the bipolar degradation of the MOSFET. In addition, in this case, lest a short circuit failure should occur between the element 7 of the upper arm V+, which was on until just before and the element 7 of the lower arm V-, it is desirable that a dead time period, during which both upper arm and lower arm are in an off state, should be set in the on operation of the element 7 of the lower arm V-, as shown in Fig. 6.

Furthermore, in this first embodiment, by using the shunt resistor 4b, the value and direction of a current flowing through the switching element 7 of the lower arm V- during the time period 2 can be speedily detected. If this reflux current is smaller than a judgment B that is a level which does not cause the bipolar degradation during the time period 2, the driving device 5 cuts off all the phases of the upper and lower arms during a time period 3 shown in Fig. 6. Here, although a level which does not cause the bipolar degradation varies according to the design and quality of a switching element 7, there is a threshold that causes the bipolar degradation as mentioned above, and therefore it is desirable that the level should be equal to or smaller than the value of the threshold. In another respect, because the time period 3 is typically very short and shorter than several microseconds, there is a case where the level that does not cause the bipolar degradation can be set to a level near to the rated current value of the relevant element or can be set to a level equal to or smaller than severalfold (for example, fivefold) the rated current of the power conversion apparatus.

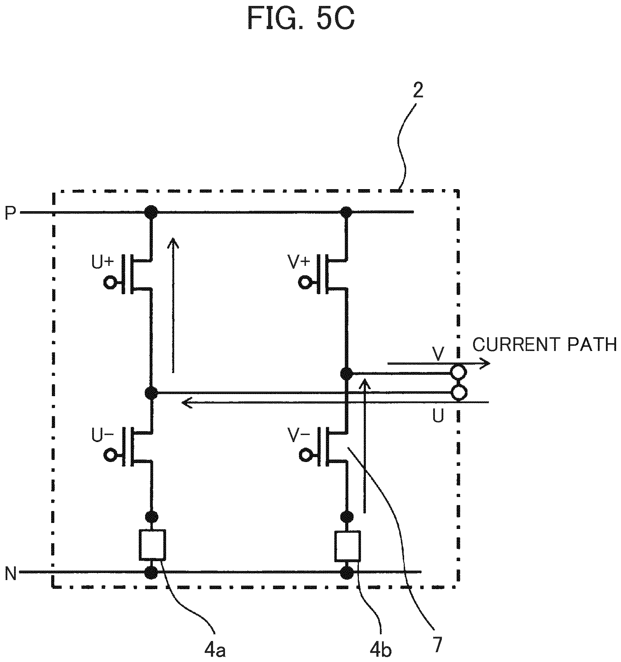

An example, in which the switching element 7 of the lower arm U- and the switching element 7 of the upper arm V-, both of which have been on so far, are turned off, is shown during a time period 3 shown in Fig. 6. With this, the current flows through a current path including body diodes of the upper and lower arms (in this case, the lower arm V- and the upper arm U+), and goes back to the smoothing capacitor 3 as shown in Fig. 5C. As a result, the smoothing capacitor 3 is charged, which makes it possible to complete the cutoff of the excess current.

During this time period 3, although a current flows through body diodes because all the switching elements 7 are in an off state, this current has already been reduced to a sufficient extent during the time period 2 as mentioned above, and therefore the problem of the bipolar degradation does not occur. In addition, the current flowing during the time period 2 is a current that is severalfold the rated current under normal usage. In this case, a voltage applied between the drain and source of the turned-on element 7 of the lower arm V- is an on-voltage determined by the characteristics of the element, and it is not so large as the voltage across the element 7 of the lower arm U- during the time period 1 that is near to the input voltage between the power supply terminal P and the power supply terminal N. Therefore, the heat release value of the element 7 of the lower arm V- during the time period 2 is drastically smaller than the value during the time period 1, which makes it possible to hold the time period 2 considerably long.

As described above, in this first embodiment, because an excess current is directly detected using a shunt resistor, and cutoff operations are executed sequentially and speedily, the shortest protection operation can be efficiently achieved during a time period from the time when a short circuit failure occurs to the time when the cutoff operation is finished. In this case, by appropriately setting the judgment A and the judgment B shown in Fig. 4, it becomes possible to make the values of the breakdown strengths of switching elements and the inverter device have adequate margins during a time period from the time when a short circuit failure occurs to the time when the cutoff operation is finished.

With this, SiC-MOSFETs, which have high performances but have large saturation currents, can be adopted, and, for example, driving voltages for driving SiC-MOSFETs can be set large, and the reduction of the loss (reduction of the on-resistance) of the power conversion apparatus as well as the improvement of the reliabilities of semiconductor elements (switching elements) can be realized. In other words, when, for example, an arm short circuit failure or a load short circuit failure occurs, the lower the on-resistance of an element to be used is, the more rapidly the bipolar degradation of the body diode of the element is accelerated. However, even if an element whose on-resistance is low is used, this first embodiment makes it possible to protect the element from suffering bipolar degradation. As a result, a power conversion apparatus with a high capability (high power conversion efficiency) and a high reliability can be realized.

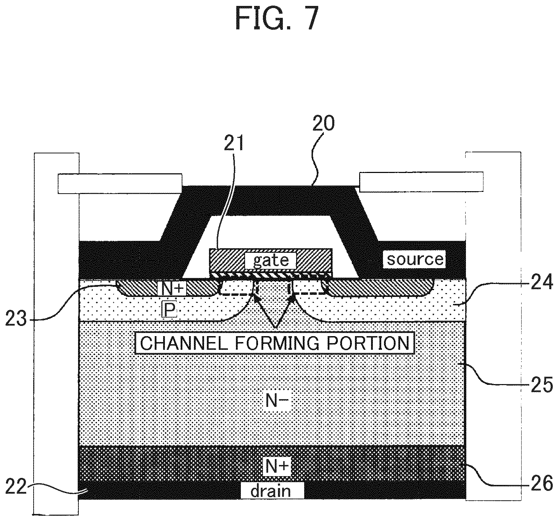

Fig. 7 shows an example of the structure of a vertical MOSFET as an example of a switching element. In Fig. 7, a channel is formed in a P-type body area 24 by applying a predefined driving voltage to a gate electrode 21, and an N+-type diffusion area 23 electrically connected to a source electrode 20, an N⁺-type semiconductor substrate 26 electrically connected to a drain electrode 22, and an N⁻-type drift area 25 become conductive with each other.

The semiconductor substrate 26 is formed by a wide band gap semiconductor typified by SiC. Furthermore, a P-type body area 24 electrically connected to the source electrode 20 and the N⁻-type drift area 25 electrically connected to the drain electrode 22 form a body diode. In the case of a wide band gap semiconductor being used, the thickness (along the vertical direction in Fig. 7) of the drift area 25 for securing a required withstand voltage can be reduced to about one tenth of the thickness of the drift area of a Si semiconductor in the case of the Si semiconductor being used. As a result, the reduction of the on-resistance of a switching element can be realized, and the significant reduction of the loss of the power conversion apparatus can be expected.

Meanwhile, Patent Literature 1 discloses that, when the failure of a switching element included in an inverter device is detected, switching elements of all the arms of the inverter device are turned off. However, if all the arms of the inverter device are turned off once when an excess current flows owing to a short circuit failure, the excess current is cut off at once, and therefore the voltages applied to the elements jump up, which may lead to the breakdown of the elements unintendedly.

In addition, Patent Literature 2 discloses that, when an excess current is detected, control is achieved so that a switching element connected in parallel to a diode is turned on. However, it is not easy to achieve such complex control with a high degree of accuracy in a short time. On the other hand, according to this first embodiment, switching elements made of wide band gap semiconductors can be protected from very large short circuit currents and large jumping-up voltages without adding a complicated protection circuit or operation.

Furthermore, in this first embodiment, an example is shown in which shunt resistors 4 are installed on the sides of the lower arms as shown in Fig. 2 and the like. The relevant shunt resistors 4 can be used when an excess current is detected (using the judgment A in Fig. 4), when a current path for a reflux current flowing using channel conduction is fabricated on the side of a lower arm, and when the magnitude of the relevant excess current is detected (using the judgment B). On the other hand, in the case where a reflux path is fabricated on the side of an upper arm (in other words, in the case where the upper arm is cut off instead of the lower arm), it is conceivable that the shunt resistors 4 are installed on the sides of the upper arms. Here, there are many cases where the power supply terminal N shown in Fig. 2 and other figures is given a ground power supply voltage. Under such circumstances, if the shunt resistors 4 are installed on the sides of the lower arms, there are some cases where the design of a judgment circuit for judging the voltage of the relevant shunt resistor 4 (for example, a judgment circuit installed in a driving device 5) becomes easy because the judgment circuit can be designed with the ground power supply voltage of the power supply terminal N in mind.

### Second Embodiment

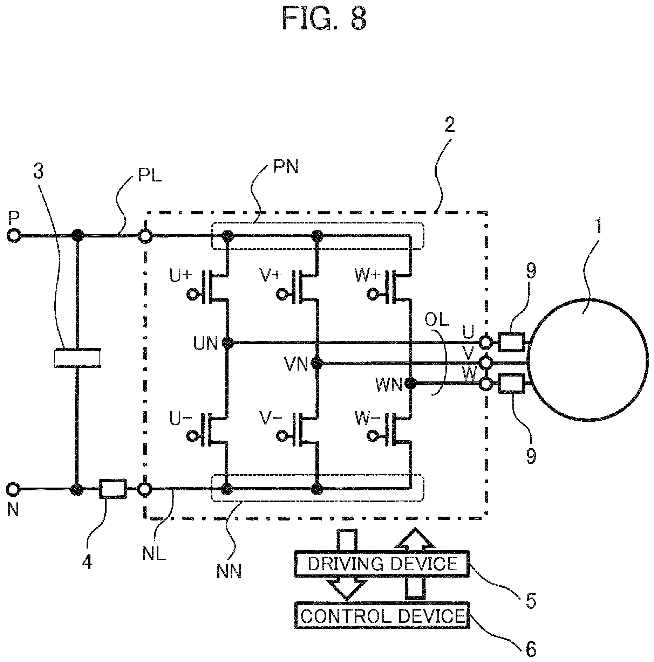

Fig. 8 shows an example of a configuration of a power conversion apparatus according to a second embodiment of the present invention.

Although an example in which shunt resistors are used as current detection means is disclosed in the first embodiment, an example in which a shunt resistor 4 and current detectors 9 such as current sensors are used is shown in this second embodiment. In Fig. 8, the shunt resistor 4 is installed on a power line NL.

The power supply line NL connects a power supply node NN, to which lower arms U-, V-, and W- are connected in common, on a low potential side and a power supply terminal N. Similarly, in Fig. 8, a power supply line PL connects a power supply node PN, to which upper arms U+, V+, and W+ are connected in common, on a high potential side and a power supply terminal P. The shunt resistor 4 can be installed on the power supply line PL instead of the power supply line NL.

On the other hand, the current detectors 9 are installed on output lines OL that connect the branch nodes UN, VN, and WN of the three phases to an AC electric motor 1 respectively, and in this case, two current detectors are installed on two output lines of two phases among the three output lines OL of the three phases. In the example shown in Fig. 8, although positions on which the current detectors 9 are installed are outside of an inverter 2, the positions can be inside of the inverter 2. In addition, positions on which the shunt resistor 4 is installed can also be inside of the inverter 2.

According to this second embodiment, because only one shunt resistor 4 is used, the number of parts of the inverter 2 can be reduced in comparison with the first embodiment. Furthermore, as is the case with the first embodiment, because the shunt resistor 4 can be used for detecting an excess current in the time period 1, a high-speed protection operation during the time period 1 can be performed.

On the other hand, the current detectors 9 are used for the judgment B during the time period 2. If the currents of two phases among the currents of the U phase, V phase, and W phase are detected, the line current of the remaining phase can be calculated from the alternating-current condition (iu+iv+iw=0), and therefore the way the current detectors 9 are disposed is not limited to the abovementioned way. Of course it is conceivable that three current detectors 9 are used for detecting the line currents of the U phase, V phase, and W phase. Because the time period 2 is a time period with a certain degree of length at the end of which the current value becomes smaller than the judgment B, a high-speed shift from the time period 2 to the time period 3 is not always necessary. Therefore, the current detectors 9 are not requested to have high-speed responses as the shunt resistor 4 is requested to, so that the current detectors 9 can be current sensors or the like.

### Third Embodiment

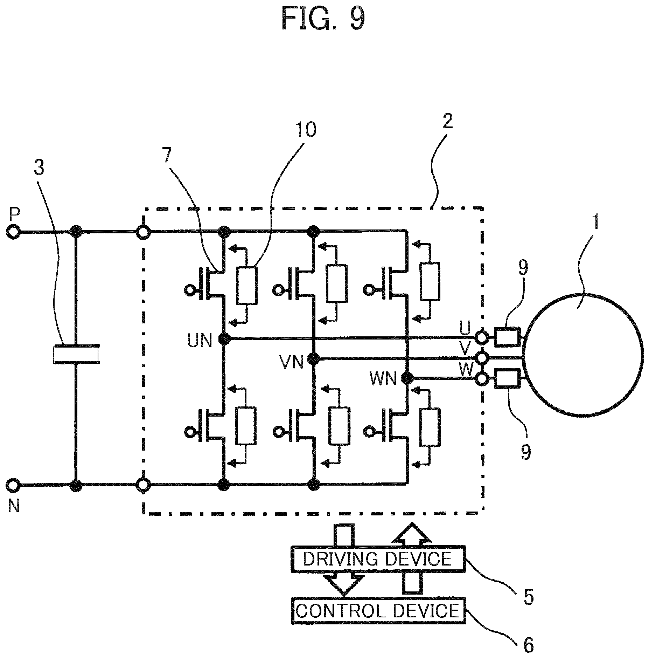

Fig. 9 shows an example of a configuration of a power conversion apparatus according to a third embodiment.

Although an example in which shunt resistors are used as current detection means is shown in the first embodiment, an example in which voltage detectors 10 are used is shown in this third embodiment. A voltage detector 10 detects a Vds between the drain and source of a switching element (SiC-MOSFET) 7. Fig. 9 shows an example in which voltage detectors 10 are installed at the switching elements 7 of all arms.

If a short circuit failure occurs, a voltage Vds between the drain and source becomes larger than in a normal on-operation state, and therefore an excess voltage can be judged with reference to the on/off information of the switching element 7 and the detection result of the relevant voltage detector 10. Alternatively, the excess voltage can be judged on the basis of information obtained from current detectors 9 such as current sensors for detecting output currents from an inverter device 2. Much the same is true on the current standard of the judgment B during the time period 2, and it is possible to preset the current standard as a voltage standard on the basis of the resistance value of a switching element 7.

According to this third embodiment, because shunt resistors are not used as current detectors, the reduction of the number of parts and the elimination of losses due to the shunt resistors can be achieved. In other words, a downsized, low-cost, and low-loss power conversion apparatus can be realized.

### Example

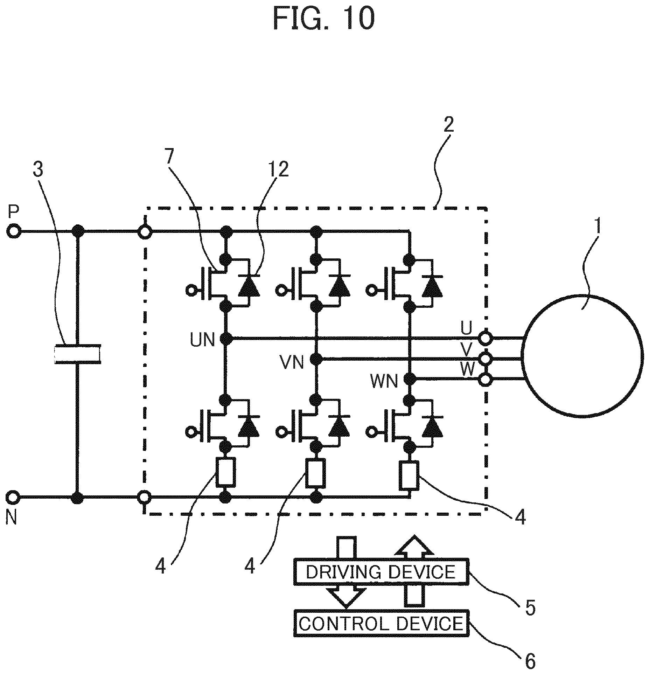

Fig. 10 shows an example of a configuration of a power conversion apparatus.

An example that is not part of the claimed invention, in which antiparallel reflux diodes 12 are connected to the outsides of switching elements 7 respectively is shown. The reflux diodes 12 are connected in parallel between the drains and the sources of the switching elements (SiC-MOSFETs) 7 of all arms respectively, and the reflux diodes 12 along with the body diodes of the switching elements 7 let reflux currents flow through themselves. For example, Schottky barrier diodes are used as the reflux diodes 12.

According to this example, although the number of parts increases correspondingly to the number of the installed reflux diodes 12, it is possible to make the reflux currents flowing through the body diodes smaller, and therefore it becomes possible to set the current value of the judgment B in Fig. 4 to a larger current value and to do other things. As a result, a time period from the time when a short circuit failure occurs to the time when blocking is completed can be more shortened, and others things can be achieved.

### List of Reference Signs

1... AC Electric Motor, 2... Inverse Converter (Inverter Device), 3... Smoothing Capacitor, 4... Shunt Resistor, 5... Driving Device, 6... Control Device, 7... Switching Element, 8... Filter, 9... Current Detector, 10... Voltage Detector, 11... Forward Converter, 12... Reflux Diode, 100... Power Conversion Apparatus, P, N... Power Supply Terminals, U, V, W... Output Terminals, UN, VN, WN... Branch Nodes

## Claims

1. A power conversion apparatus (100) comprising:
an inverter (2) including a plurality of upper arms having switching elements (7) of wide band gap semiconductors and a plurality of lower arms having switching elements (7) of wide band gap semiconductors;
a control unit (6) that is configured to perform the following steps, when an excess current resulting from a short circuit flows through the inverter (2);
first turning off a first arm, which is the upper or lower arm disposed on a path of the short circuit through which the excess current flows, and then, after a dead time period, turning on a second arm that forms a half-bridge with the first arm,
and at the end of a second time period that starts when turning on the second arm, turning off the second arm in accordance with a current flowing through the second arm,
wherein no antiparallel reflux diodes are connected to an outside of the switching elements, and
each of the switching elements (7) is a vertical SiC-MOSFET,
**characterized in that**
the control unit (6) is configured for synchronous rectification operation executed on a vertical SiC-MOSFET through whose body diode a reflux current is flowing, such that not only the body diode of the SiC-MOSFET but also a low resistant channel conduction of the SiC-MOSFET, which is connected to the body diode in parallel, is utilized as a current path for the reflux current, and
the power conversion apparatus is configured such that during the second time period, a value and direction of a reflux current flowing through a switching element (7) of the second arm is detected by a shunt resistor, and if the detected reflux current is smaller than a threshold value that is a level which does not cause bipolar degradation, said second time period ends and all phases of the upper and lower arms are cut off.

2. The power conversion apparatus (100) according to claim 1, wherein a detector (9) is installed on the second arm.

3. The power conversion apparatus (100) according to claim 1, wherein the threshold value is a predefined first judgment value.

4. The power conversion apparatus (100) according to claim 3, wherein the first judgment value is equal to or smaller than fivefold the rated current of the inverter (2).

5. The power conversion apparatus (100) according to claim 4, wherein the first judgment value is larger than a second judgment value for judging that the excess current flows.

6. The power conversion apparatus (100) according to claim 2, wherein the second arm is the lower arm, and the shunt resistance (4) is installed on at least some lower arm of the plurality of lower arms.

7. A motor apparatus comprising:
a power conversion apparatus (100) according to any of claim 1 to claim 6, and
a motor (1) that operates using the power provided by the power conversion apparatus (100).

8. The power conversion apparatus according to claim 1, wherein the control unit (6) is configured to perform
a first control operation in which, when the excess current flows through the inverter (2), the current path that passes through the channels of the plurality of switching elements (7) is built on the upper arm, and the excess current is refluxed through the current path; and
a second control operation in which a current path that passes through body diodes of the plurality of switching elements (7) on the the lower arms after the first control operation, and the excess current is returned to the smoothing capacitor (3) through the current path.

9. The power conversion apparatus (100) according to claim 8, wherein the control unit (6) is configured to monitor a reflux current flowing in the first control operation, and to perform the second control operation when the reflux current is reduced to a predefined first judgment value.

10. The power conversion apparatus (100) according to claim 9, wherein the first judgment value is larger than a second judgment value for judging that the excess current flows.

11. The power conversion apparatus (100) according to claim 1, further comprising:
a first power supply terminal to which a power supply voltage on a high potential side is supplied;
a second power supply terminal to which a power supply voltage on a low potential side is supplied;
a first power supply node connected to the first power supply terminal via a first power supply line;
a second power supply node connected to the second power supply terminal via a second power supply line;
branch nodes (UN, VN, WN) of three phases;
upper arms of three phases that are installed respectively between the first power supply node and the branch nodes of three phases, and include switching elements (7) of wide band gap semiconductors respectively;
lower arms of three phases that are installed respectively between the second power supply node and the branch nodes of three phases, and include switching elements (7) of wide band gap semiconductors respectively;
output lines that connect the branch nodes (UN, VN, WN) of three phases to a load respectively;
first detectors (9) for detecting currents flowing between the first power supply terminal or the second power supply terminal and the branch nodes (UN, VN, WN) of three phases; wherein the control unit (6) is configured to control the upper arms of three phases and the lower arms of three phases.

12. The power conversion apparatus (100) according to claim 11, wherein the first detectors (9) includes shunt resistors (4).

13. The power conversion apparatus (100) according to claim 12,
wherein the first detectors (9) are installed on the second arms, and
the control unit (6) is configurered to turn off the second arms on the basis of the detection results of the first detectors (9).

14. The power conversion apparatus (100) according to claim 12,
wherein the first detectors (9) are installed on the first power supply line or on the second power supply line,
the power conversion apparatus (100) further comprises second detectors (9) for detecting currents flowing through the output lines, and
the control unit (6) is configured to turn off the second arms on the basis of the detection results of the second detectors (9).

## Patentansprüche

1. Leistungsumsetzungsvorrichtung (100), die Folgendes umfasst:
einen Wechselrichter (2), der mehrere obere Zweige, die Schaltelemente (7) mit Halbleitern mit breiter Bandlücke aufweisen, und mehrere untere Zweige, die Schaltelemente (7) mit Halbleitern mit breiter Bandlücke aufweisen, enthält;
eine Steuereinheit (6), die konfiguriert ist, die folgenden Schritte durchzuführen, wenn ein übermäßiger Strom, der aus einem Kurzschluss resultiert, durch den Wechselrichter (2) fließt;
zunächst Ausschalten eines ersten Zweigs, der der obere oder der untere Zweig ist, der auf einem Weg des Kurzschlusses angeordnet ist, durch den der übermäßige Strom fließt, und anschließend nach einem Totzeitraum Einschalten eines zweiten Zweigs, der mit dem ersten Zweig eine Halbbrücke bildet,
und am Ende eines zweiten Zeitraums, der beginnt, wenn der zweite Zweig eingeschaltet wird, Ausschalten des zweiten Zweigs in Übereinstimmung mit einem Strom, der durch den zweiten Zweig fließt,
wobei keine antiparallelen Rückflussdioden mit einer Außenseite der Schaltelemente verbunden sind, und
jedes der Schaltelemente (7) ein vertikaler SiC-MOSFET ist,
**dadurch gekennzeichnet, dass**
die Steuereinheit (6) für einen synchronen Gleichrichtungsvorgang konfiguriert ist, der auf einem vertikalen SiC-MOSFET ausgeführt wird, durch dessen Body-Diode ein Rückflussstrom fließt, derart, dass nicht lediglich die Body-Diode des SiC-MOSFET, sondern außerdem die Stromleitung eines Kanals mit niedrigem Widerstand des SiC-MOSFET, der parallel zur Body-Diode geschaltet ist, als ein Stromweg für den Rückflussstrom genutzt wird, und
die Leistungsumsetzungsvorrichtung derart konfiguriert ist, dass während des zweiten Zeitraums ein Wert und eine Richtung eines Rückflussstroms, der durch ein Schaltelement (7) des zweiten Zweigs fließt, durch einen Nebenschlusswiderstand detektiert werden, und
dann, wenn der detektierte Rückflussstrom kleiner als ein Schwellenwert ist, der ein Pegel ist, der keine bipolare Verschlechterung bewirkt, der zweite Zeitraum endet und alle Phasen des oberen und des unteren Zweigs ausgeschaltet werden.

2. Leistungsumsetzungsvorrichtung (100) nach Anspruch 1,
wobei ein Detektor (9) auf dem zweiten Zweig installiert ist.

3. Leistungsumsetzungsvorrichtung (100) nach Anspruch 1,
wobei der Schwellenwert ein vorgegebener erster Entscheidungswert ist.

4. Leistungsumsetzungsvorrichtung (100) nach Anspruch 3,
wobei der erste Entscheidungswert kleiner oder gleich dem Fünffachen des Nennstroms des Wechselrichters (2) ist.

5. Leistungsumsetzungsvorrichtung (100) nach Anspruch 4,
wobei der erste Entscheidungswert größer als ein zweiter Entscheidungswert zum Entscheiden, dass der übermäßige Strom fließt, ist.

6. Leistungsumsetzungsvorrichtung (100) nach Anspruch 2,
wobei der zweite Zweig der untere Zweig ist, und
der Nebenschlusswiderstand zumindest auf einem unteren Zweig der mehreren unteren Zweige installiert ist.

7. Motorvorrichtung, die Folgendes umfasst:
eine Leistungsumsetzungsvorrichtung (100) nach einem der Ansprüche von 1 bis 6, und
einen Motor (1), der unter Verwendung der Leistung, die durch die Leistungsumsetzungsvorrichtung (100) bereitgestellt wird, arbeitet.

8. Leistungsumsetzungsvorrichtung nach Anspruch 1, wobei die Steuereinheit (6) konfiguriert ist, Folgendes durchzuführen:
einen ersten Steuervorgang, wobei dann, wenn der übermäßige Strom durch den Wechselrichter (2) fließt, der Stromweg, der durch die Kanäle der mehreren Schaltelemente (7) verläuft, auf dem oberen Zweig aufgebaut wird und bewirkt wird, dass der übermäßige Strom durch den Stromweg zurückfließt; und
einen zweiten Steuervorgang, wobei nach dem ersten Steuervorgang ein Stromweg durch Body-Dioden der mehreren Schaltelemente (7) auf den unteren Zweigen verläuft und der übermäßige Strom durch den Stromweg zum Glättungskondensator (3) zurückgeführt wird.

9. Leistungsumsetzungsvorrichtung (100) nach Anspruch 8,
wobei die Steuereinheit (6) konfiguriert ist, einen Rückflussstrom, der im ersten Steuervorgang fließt, zu überwachen und den zweiten Steuervorgang durchzuführen, wenn der Rückflussstrom auf einen vorgegebenen ersten Entscheidungswert verringert ist.

10. Leistungsumsetzungsvorrichtung (100) nach Anspruch 9,
wobei der erste Entscheidungswert größer als ein zweiter Entscheidungswert zum Entscheiden, dass der übermäßige Strom fließt, ist.

11. Leistungsumsetzungsvorrichtung (100) nach Anspruch 1, die ferner Folgendes umfasst:
einen ersten Stromversorgungsanschluss, dem eine Stromversorgungsspannung auf einer Hochpotentialseite zugeführt wird;
einen zweiten Stromversorgungsanschluss, dem eine Stromversorgungsspannung auf einer Niederpotentialseite zugeführt wird;
einen ersten Stromversorgungsknoten, der über eine erste Stromversorgungsleitung mit dem ersten Stromversorgungsanschluss verbunden ist;
einen zweiten Stromversorgungsknoten, der über eine zweite Stromversorgungsleitung mit dem zweiten Stromversorgungsanschluss verbunden ist;
Abzweigknoten (UN, VN, WN) der drei Phasen;
obere Zweige der drei Phasen, die jeweils zwischen dem ersten Stromversorgungsknoten und den Abzweigknoten der drei Phasen installiert sind und jeweils Schaltelemente (7) mit Halbleitern mit breiter Bandlücke enthalten;
untere Zweige der drei Phasen, die jeweils zwischen dem zweiten Stromversorgungsknoten und den Abzweigknoten der drei Phasen installiert sind und jeweils Schaltelemente (7) mit Halbleitern mit breiter Bandlücke enthalten;
Ausgangsleitungen, die die Abzweigknoten (UN, VN, WN) der drei Phasen jeweils mit einer Last verbinden;
erste Detektoren (9) zum Detektieren von Strömen, die zwischen dem ersten Stromversorgungsanschluss oder dem zweiten Stromversorgungsanschluss und den Abzweigknoten (UN, VN, WN) der drei Phasen fließen; wobei die Steuereinheit (6) konfiguriert ist, die oberen Zweige der drei Phasen und die unteren Zweige der drei Phasen zu steuern.

12. Leistungsumsetzungsvorrichtung (100) nach Anspruch 11,
wobei die ersten Detektoren (9) Shunt-Widerstände (4) enthalten.

13. Leistungsumsetzungsvorrichtung (100) nach Anspruch 12,
wobei die ersten Detektoren (9) auf den zweiten Zweigen installiert sind, und
die Steuereinheit (6) konfiguriert ist, die zweiten Zweige auf der Grundlage der Detektionsergebnisse der ersten Detektoren (9) auszuschalten.

14. Leistungsumsetzungsvorrichtung (100) nach Anspruch 12,
wobei die ersten Detektoren (9) auf der ersten Stromversorgungsleitung oder auf der zweiten Stromversorgungsleitung installiert sind,
die Leistungsumsetzungsvorrichtung (100) ferner zweite Detektoren (9) zum Detektieren von Strömen, die durch die Ausgangsleitungen fließen, umfasst, und
die Steuereinheit (6) konfiguriert ist, die zweiten Zweige auf der Grundlage der Detektionsergebnisse der zweiten Detektoren (9) auszuschalten.

## Revendications

1. Appareil de conversion de puissance (100) comprenant :
un convertisseur (2) incluant une pluralité de bras supérieurs ayant des éléments de commutation (7) de semi-conducteurs à large bande interdite et une pluralité de bras inférieurs ayant des éléments de commutation (7) de semi-conducteurs à large bande interdite ;
une unité de commande (6) qui est configurée pour effectuer les étapes suivantes, quand un courant en excès résultant d'un court-circuit s'écoule à travers le convertisseur (2) ;
tout d'abord, désactiver un premier bras, qui est le bras supérieur ou inférieur disposé sur un chemin du court-circuit à travers lequel le courant en excès s'écoule, et puis, après une période de temps mort, activer un second bras qui forme un demi-pont avec le premier bras,
et à la fin d'une seconde période de temps qui démarre quand le second bras est activé, désactiver le second bras en accord avec un courant s'écoulant à travers le second bras,
dans lequel aucune diode à reflux montée tête-bêche n'est connectée à une partie extérieure des éléments de commutation, et
chacun des éléments de commutation (7) est un MOSFET SiC vertical,
**caractérisé en ce que**
l'unité de commande (6) est configurée pour une opération de rectification synchrone exécutée sur un MOSFET SiC vertical dont la diode de corps est traversé par un courant de reflux, de sorte que non seulement la diode de corps du MOSFET SiC mais également une conduction de canal à basse résistance du MOSFET SiC, qui est connectée à la diode de corps en parallèle, sont utilisées comme chemin de courant pour le courant de reflux, et
l'appareil de conversion de puissance est configuré de sorte que pendant la seconde période de temps, une valeur et une direction d'un courant de reflux s'écoulant à travers un élément de commutation (7) du second bras sont détectées par une résistance shunt, et
si le courant de reflux détecté est inférieur à une valeur seuil qui est un niveau qui ne doit pas entraîner de dégradation bipolaire, ladite seconde période de temps se termine et toutes les phases des bras supérieurs et inférieurs sont coupées.

2. Appareil de conversion de puissance (100) selon la revendication 1, dans lequel un détecteur (9) est installé sur le second bras.

3. Appareil de conversion de puissance (100) selon la revendication 1, dans lequel la valeur seuil est une première valeur de jugement prédéfinie.

4. Appareil de conversion de puissance (100) selon la revendication 3, dans lequel la première valeur de jugement est égale ou inférieure au quintuple du courant nominal du convertisseur (2).

5. Appareil de conversion de puissance (100) selon la revendication 4, dans lequel la première valeur de jugement est supérieure à une seconde valeur de jugement destinée à juger que le courant en excès s'écoule.

6. Appareil de conversion de puissance (100) selon la revendication 2, dans lequel le second bras est le bras inférieur, et
la résistance shunt (4) est installée sur l'un au moins de la pluralité de bras inférieurs.

7. Appareil à moteur comprenant :
l'appareil de conversion de puissance (100) selon l'une quelconque des revendications 1 à 6, et
un moteur (1) qui fonctionne en utilisant la puissance fournie par l'appareil de conversion de puissance (100).

8. Appareil de conversion de puissance selon la revendication 1, dans lequel l'unité de commande (6) est configurée pour effectuer :
une première opération de commande dans laquelle, quand le courant en excès s'écoule à travers le convertisseur (2), le chemin de courant qui passe à travers les canaux de la pluralité d'éléments de commutation (7) est formé sur le bras supérieur, et le courant en excès est reflué à travers le chemin de courant ; et
une seconde opération de commande dans laquelle un chemin de courant passe à travers les diodes de corps de la pluralité d'éléments de commutation (7) sur les bras inférieurs après la première opération de commande, et le courant en excès est renvoyé au condensateur de lissage (3) à travers le chemin de courant.

9. Appareil de conversion de puissance (100) selon la revendication 8, dans lequel l'unité de commande (6) est configurée pour surveiller un courant de reflux s'écoulant dans la première opération de commande, et pour effectuer la seconde opération de commande quand le courant de reflux est réduit à une première valeur de jugement prédéfinie.

10. Appareil de conversion de puissance (100) selon la revendication 9, dans lequel la première valeur de jugement est supérieure à une seconde valeur de jugement destinée à juger que le courant en excès s'écoule.

11. Appareil de conversion de puissance (100) selon la revendication 1, comprenant en outre :
une première borne d'alimentation en puissance à laquelle une tension d'alimentation en puissance sur un côté à potentiel élevé est alimentée ;
une seconde borne d'alimentation en puissance à laquelle une tension d'alimentation en puissance sur un côté à faible potentiel est alimentée ;
un premier nœud d'alimentation en puissance connecté à la première borne d'alimentation en puissance via une première ligne d'alimentation en puissance ;
un second nœud d'alimentation en puissance connecté à la seconde borne d'alimentation en puissance via une seconde ligne d'alimentation en puissance ;
des nœuds de ramification (UN, VN, WN) de trois phases ;
des bras supérieurs de trois phases qui sont installés respectivement entre le premier nœud d'alimentation en puissance et les nœuds de ramification de trois phases, et qui incluent des éléments de commutation (7) de semi-conducteurs à large bande interdite respectivement ;
des bras inférieurs de trois phases qui sont installés respectivement entre le second nœud d'alimentation en puissance et les nœuds de ramification de trois phases, et qui incluent des éléments de commutation (7) de semi-conducteurs à large bande interdite respectivement ;
des lignes de sortie qui connectent les nœuds de ramification (UN, VN, WN) de trois phases à une charge respectivement ;
des premiers détecteurs (9) destinés à détecter des courants s'écoulant entre la première borne d'alimentation en puissance ou la seconde borne d'alimentation en puissance et les nœuds de ramification (UN, VN, WN) de trois phases ;
dans lequel l'unité de commande (6) est configurée pour commander les bras supérieurs de trois phases et les bras inférieurs de trois phases.

12. Appareil de conversion de puissance (100) selon la revendication 11, dans lequel les premiers détecteurs (9) incluent des résistances shunt (4).

13. Appareil de conversion de puissance (100) selon la revendication 12,
dans lequel les premiers détecteurs (9) sont installés sur les seconds bras, et
l'unité de commande (6) est configurée pour désactiver les seconds bras sur la base des résultats de détection des premiers détecteurs (9).

14. Appareil de conversion de puissance (100) selon la revendication 12,
dans lequel les premiers détecteurs (9) sont installés sur la première ligne d'alimentation en puissance ou sur la seconde ligne d'alimentation en puissance,
l'appareil de conversion de puissance (100) comprend en outre des seconds détecteurs (9) destinés à détecter des courants s'écoulant à travers les lignes de sortie, et
l'unité de commande (6) est configurée pour désactiver les seconds bras sur la base des résultats de détection des seconds détecteurs (9).
